# EUROPEAN PATENT SPECIFICATION

(11) **EP 1 157 808 B1**
(45) Date of publication and mention of the grant of the patent: **25.08.2004**
(21) Application number: 01109850.6
(22) Date of filing: 23.04.2001
(51) Int. Cl.: B29C 69/00, B29C 51/00, F25D 23/02, F25D 23/08

(54) **Method for producing a door of plastic material for a household electrical appliance and the door obtained thereby**
Verfahren zum Herstellen einer Kunststofftür für elektrische Haushaltsgeräte und durch das Verfahren hergestellte Tür
Procédé de fabrication d'une porte pour appareils électroménager et porte produit par ce procédé

(30) Priority: 25.05.2000 IT MI20001160
(43) Date of publication of application: 28.11.2001
(73) Proprietor: WHIRLPOOL CORPORATION, Benton Harbor Michigan 49022 (US)
(72) Inventor: Luisi, Armando, Whirlpool Europe s.r.l., 21025 Comerio (IT); Maritan, Marco, Whirlpool Europe s.r.l., 21025 Comerio (IT)
(74) Representative: Guerci, Alessandro

(56) References cited:
- EP-A- 0 942 245
- WO-A-99/13280
- DE-A- 19 807 411
- US-A- 5 168 621
- US-A- 5 507 999
- US-A- 5 716 581
- US-A- 5 759 591
- PATENT ABSTRACTS OF JAPAN vol. 009, no. 282 (M-428), 9 November 1985 (1985-11-09) & JP 60 125633 A (KIYOORAKU KK), 4 July 1985 (1985-07-04)
- PATENT ABSTRACTS OF JAPAN vol. 1996, no. 02, 29 February 1996 (1996-02-29) & JP 07 266408 A (TSUTSUNAKA PLAST IND CO LTD), 17 October 1995 (1995-10-17)

## Description

The present invention relates to a method for obtaining a door of plastic material for a household electrical appliance or for an internal compartment thereof in accordance with the introduction to the main claim; the invention also relates to a door obtained by this method.

As is well known, a door of plastic material for a household electrical appliance and in particular a closure door for an internal compartment thereof (for example the door of a compartment of temperature less than 0°C positioned in a refrigerator compartment of temperature greater than 0°C) is obtained by known injection moulding. This process comprises the formation of two half-shells which are then joined together with an insulating element such as a preformed block of expanded polystyrene interposed.

Functional members have then to be connected to this door, such as the hinge pins (produced separately), which are positioned in appropriate seats (holes) provided in suitable positions on opposing sides of the door. The handle is also connected to this latter for its movement. Finally, the door is further machined on another side to create therein the seat for a usual fastener member or to create therein the seat for receiving a locking element for this member if positioned on an encountering wall against which the door closes. A seat must also be provided in the door edge to receive a gasket.

The various operations carried out on the door during its assembly result in a lengthy cycle time and high production costs, with evident drawbacks both for the appliance manufacturer and for the purchaser of the finished product.

An object of the present invention is to provide a method for easily and quickly obtaining a door of plastic material for a household electrical appliance or for an internal compartment thereof, which already possesses most of its functional elements, such as the hinge pins and handle, necessary for its use.

This and further objects which will be apparent to the expert of the art are attained by a method according to the accompanying claims.

A further object of the invention is to provide a door obtained by the method of the invention which can be easily and quickly mounted in or on a household electrical appliance.

This and further objects which will be apparent to the expert of the art are attained by a door according to the accompanying claims.

The present invention will be more apparent from the following drawing, which is provided by way of non-limiting example and in which:

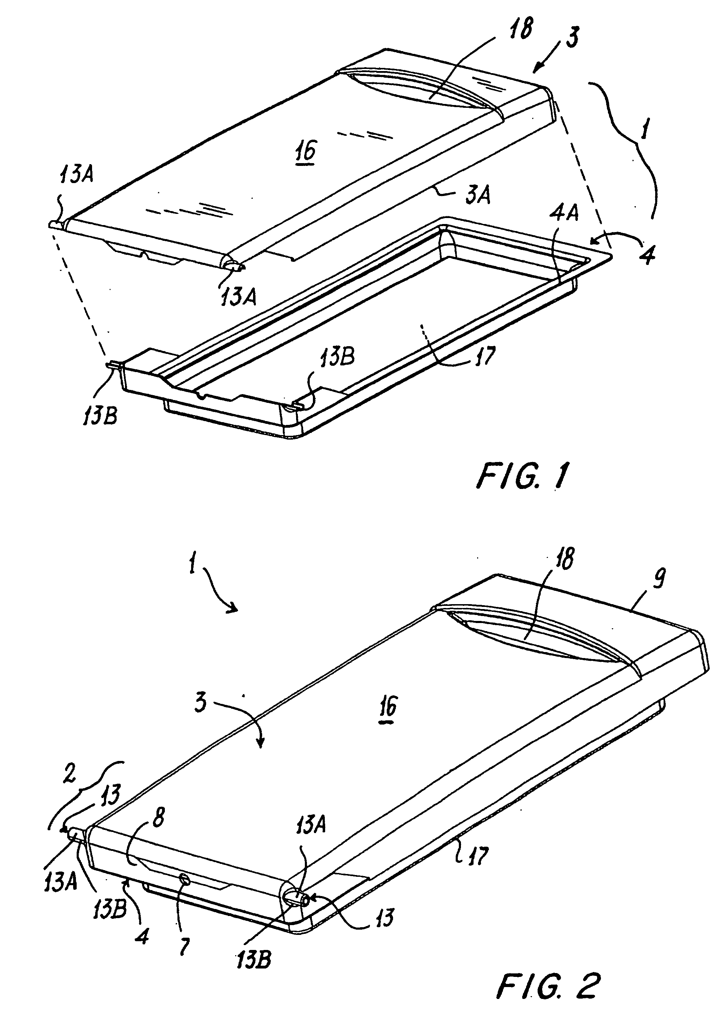

Figure 1 is an exploded perspective view of a door obtained in accordance with the invention;
Figure 2 is a perspective view of the door of Figure 1 assembled;
Figure 3 is a perspective view of the door of Figure 2 from another angle; and

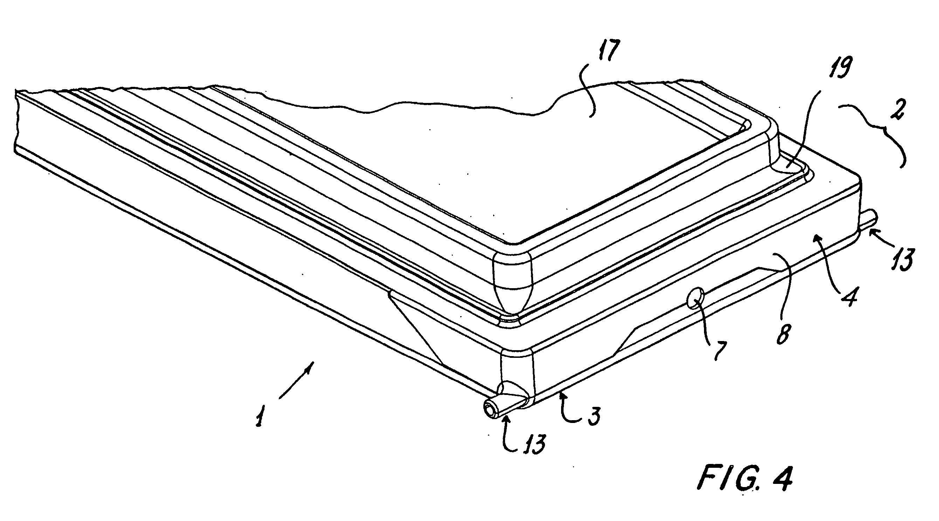

Figure 4 is a perspective partial view of the door of Figure 2 from below.

With reference to said figures, a door of plastic material is indicated overall by 1. It can be used, for example, in the interior of a refrigerator as the door for frontally closing a compartment (for example of temperature less than 0°C) provided inside the compartment of temperature higher than 0°C.

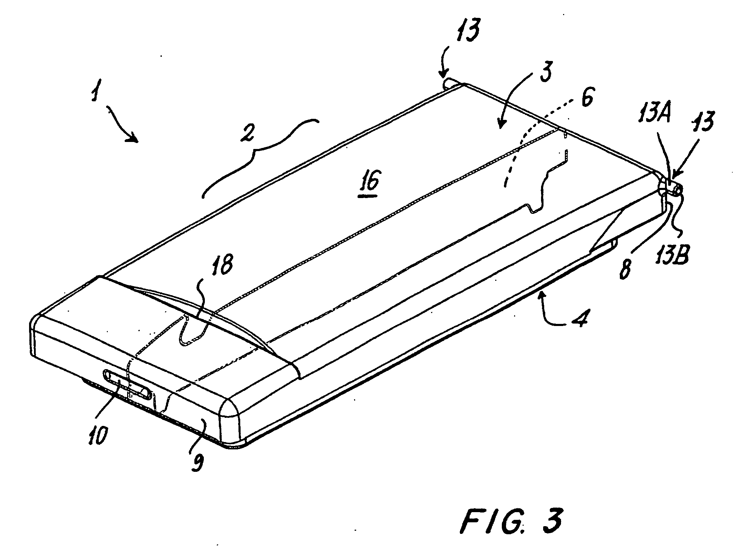

This door comprises a body 2, obtained by moulding, presenting two portions 3 and 4 joined together along edges 3A and 4A respectively. Between the two portions there is present a cavity 6 (Figure 3) for receiving a usual insulating material (not shown) which is fed into the door 1, after this latter has been formed, through a hole 7 provided in a side 8 of the body 2.

In a side 9 opposite the said side 8, the body 2 comprises a recess 10 for receiving a usual member (not shown) for fastening the door 1 against a wall of that refrigerator compartment to be closed by said door; alternatively, this recess can receive a usual locking element for said fastener member should this be positioned on said wall.

From lateral ends of the side 8 of the body 2 there project corresponding tubular elements 13 to act as hinge pins for the movement of the door 1 when installed. Each element or hinge pin 13 comprises two parts 13A and 13B formed integrally with the portions 3 and 4 of the body 2 and joined together on constructing the body 2 by moulding, preferably by double thermoforming. The portions 3 and 4 are rigidly joined together by means of this thermoforming.

The body 2 also comprises two opposing faces 16 and 17 provided on the portions 3 and 4 respectively; the first comprises a handle formed integrally with the portion 3, and the second presents an annular recess 19 close to its peripheral edge, to receive a usual seal member or gasket (not shown). This gasket is for example of polyurethane and is obtained by depositing polyurethane in the plastic state into the recess 19; polymerization of the polyurethane results in its solidification, and maintains it fixed to the portion 4 of the body 2 of the door 1.

To construct the door 1, rectangular sheets of plastic material are initially used to obtain each portion 3 and 4 of the door 2.

Two sheets are positioned parallel and spaced apart, and retained in known manner inside a (double) thermoforming mould, said double thermoforming process also being currently known as a twin-sheet process. Moulding is then carried out. This comprises positioning two overlying flat sheets of plastic material between the open parts (hollow half-moulds) of a mould, heating said sheets while in this position, closing the mould and shaping said sheets in accordance with the adjacent half-moulds by forcing said sheets against these latter by feeding compressed air between the sheets while still in their parallel position and/or applying a vacuum between each sheet and the adjacent half-mould.

After shaping the sheets in accordance with the walls of the half-moulds and simultaneously joining them together along their perimeter, the mould is opened and the door of plastic material obtained in this manner is extracted from it. It should be noted that on closing the two half-moulds a joint is formed with perfect irreversible bonding of the portions 3 and 4 of the hollow body 2, this joint ensuring structural rigidity of the body 2.

When the mould is closed, the bonding between the portions 3 and 4 results in simultaneous formation of the pins 13. Because of the twin-sheet technology, said pins do not require further reinforcement elements.

Moreover, if adequately shaped, the mould enables the handle 18 and recess 10 to be formed. Consequently, with a single moulding operation a door for a household electrical appliance or for an internal compartment thereof (as in the aforedescribed example) can be obtained already provided with functional parts such as hinge pins, handle and seat for the fastener member or for the locking element for this latter.

A preferred embodiment of the invention has been described.

Others are however possible, such as one in which recesses or shelves are provided in the face 17 for supporting containers, or other functional elements such as seats for a thermostat or others.

## Claims

1. A method for obtaining a door of plastic material for a household electrical appliance or for an internal compartment thereof, said door comprising an insulated body (2), **characterised by** comprising moulding the door by thermoforming in the following steps:
a) depositing a pair of sheets of plastic material, disposed parallel to each other and spaced apart, between two open half-moulds of a mould;
b) heating said sheets;
c) closing the mould;
d) shaping each said sheet in accordance with the inner walls of the adjacent half-mould and joining together the sheets shaped in this manner, said shaping taking place by applying vacuum between each sheet and the relative half-mould and/or by blowing air between the sheets;
e) feeding an insulatory material into the door;
f) opening the mould and extracting the door obtained;
during the step involving the shaping of each sheet of plastic material there being formed hinge pins (13), which are hence integral with the body (2) of the door (1).

2. A method as claimed in claim 1 **characterised in that** during the step involving the shaping of each sheet of plastic material there is formed a handle (18) for moving the door for its opening and closure.

3. A method as claimed in claim 1, **characterised in that** during the step involving the shaping of each sheet of plastic material there is formed a recess (10) for a member for fastening the door (1) or for accepting a locking element for a door fastener member positioned on an encountering wall against which said door abuts on closure.

4. A method as claimed in claim 1, **characterised in that** during the step involving the shaping of each sheet of plastic material there is formed an annular recess (19) **that** is formed in a face (17) of the body (2) of the door (1) during its thermoforming, in this recess there then being poured an insulating material in the plastic state to define, after polymerization, a seal gasket on said face.

5. A door obtained by the method of claim 1 for a household electrical appliance or for an internal compartment thereof, such as a door for a compartment of temperature less than 0°C inserted into a compartment of temperature higher than 0°C of a refrigerator, said door (1) comprising a body (2) of plastic material , said body presenting two portions (3, 4) joined together and defining an internal cavity (6) in which insulating material is present, the body presenting opposing sides (8, 9) and opposing faces (16, 17), **characterised in that** said body (2) comprises hinge pins (13) integral with its portions (3, 4).

6. A door as claimed in claim 5, **characterised in that** said body (2) comprises a handle (18).

7. A door as claimed in claim 5, **characterised in that** said body (2) comprises a seat (10) for a fastener member associated with the door (1) or for a locking element for a fastener member associated with a wall against which the door abuts.

8. A door as claimed in claims 5 and 6, **characterised in that** its body (2) comprises two portions (3, 4) joined together, each supporting a portion (13A, 13B) of each hinge pin (13), said portions (13A, 13B) when joined together defining said pin.

## Patentansprüche

1. Verfahren zur Herstellung einer Kunststofftür für ein elektrisches Haushaltsgerät oder für eine Innenkammer des Haushaltsgeräts, wobei die Tür einen Isolationskörper (2) aufweist,
**dadurch gekennzeichnet,**
**dass** die Tür durch Thermoformung in folgenden Schritten gegossen wird:
a) zwei parallel mit Abstand zueinander angeordnete Kunststoffplatten werden zwischen zwei offenen Halbformen einer Gießform eingelegt,
b) diese Platten werden erhitzt,
c) die Form wird geschlossen,
d) jede Platte wird in Übereinstimmung mit den Innenwänden der benachbarten Halbformen geformt, und die derart geformten Platten werden miteinander verbunden, wobei die Formung durch Anwendung von Vakuum zwischen jeder Platte und der betreffenden Halbform und/oder durch Zuführung von Druckluft zwischen die Platten erfolgt,
e) ein Isolierungsmaterial wird in die Tür eingefüllt,
f) die Form wird geöffnet, und die hergestellte Tür wird entnommen,
wobei während des die Formung jeder Kunststoffplatte einschließenden Schritts Gelenkstifte (13) gebildet werden, die mit dem Körper (2) der Tür (1) damit integriert verbunden sind.

2. Verfahren nach Anspruch 1,
**dadurch gekennzeichnet,**
**dass** während des die Formung jeder Kunststoffplatte einschließenden Schritts ein Handgriff (18) zum Bewegen der Tür für deren Öffnen und Schließen gebildet wird.

3. Verfahren nach Anspruch 1,
**dadurch gekennzeichnet,**
**dass** während des die Formung jeder Kunststoffplatte einschließenden Schritts eine Ausnehmung (10) für ein Glied zum Befestigen der Tür (1) oder für das Aufnehmen eines Schlosselements für ein Türbefestigungsglied gebildet wird, das an einer Gegenwand angeordnet ist, gegen die die Tür beim Schließen anschlägt.

4. Verfahren nach Anspruch 1,
**dadurch gekennzeichnet,**
**dass** während des die Formung jeder Kunststoffplatte einschließenden Schritts eine ringförmige Einkehlung (19) in einer Fläche (17) des Körpers (2) der Tür (1) während der Thermoformung der Tür gebildet wird und dass diese Einkehlung (19) dort dann mit einem Isolationsmaterial im plastischen Zustand ausgegossen wird, um nach der Polymerisation eine Dichtung auf dieser Fläche (17) zu bilden.

5. Tür, die nach dem Verfahren des Anspruchs 1 für ein elektrisches Haushaltsgerät oder für eine Innenkammer des Haushaltsgeräts hergestellt ist, beispielsweise eine Tür für eine Kammer mit einer geringeren Temperatur als 0°C, wobei die Kammer in eine Kühlschrankabteilung mit einer höheren Temperatur als 0°C eingefügt ist, wobei die Tür (1) einen Kunststoffkörper (2) und dieser aus zwei Teilen (3, 4) besteht, die miteinander verbunden sind und einen Innenhohlraum bilden, in dem Isolationsmaterial vorhanden ist, und wobei der Körper gegenüberliegende Seiten (8, 9) und gegenüberliegende Flächen (16, 17) aufweist,
**dadurch gekennzeichnet,**
**dass** der Körper (2) Gelenkstifte 13) aufweist, die mit den Teilen (3, 4) des Körpers integriert verbunden sind.

6. Tür nach Anspruch 5,
**dadurch gekennzeichnet,**
**dass** der Körper (2) einen Handgriff (18) aufweist.

7. Tür nach Anspruch 5,
**dadurch gekennzeichnet,**
**dass** der Körper (2) einen Sitz (10) für ein mit der Tür (1) verbundenes Befestigungsglied oder für ein Schlosselement für ein Befestigungsglied aufweist, das mit einer Wand verbunden ist, gegen die die Tür anschlägt.

8. Tür nach Anspruch 5,
**dadurch gekennzeichnet,**
**dass** der Körper (2) zwei Teile (3, 4) aufweist, die miteinander verbunden sind, von denen jeder einen Teil (13A, 13B) jedes Gelenkstifts (13) trägt und die nach ihrer Verbindung miteinander den Gelenkstift bilden.

## Revendications

1. Procédé de fabrication d'une porte en matière plastique pour un appareil électroménager ou pour un compartiment interne de l'appareil, ladite porte comprenant un corps isolé (2), **caractérisé en ce qu'**il comprend le moulage de la porte par thermoformage au moyen des étapes suivantes :
a) dépôt d'une paire de feuilles en matière plastique, disposées parallèlement l'une à l'autre et en étant espacées, entre deux moitiés ouverte d'un moule;
b) chauffage desdites feuilles;
c) fermeture du moule
d) mise en forme de chacune desdites feuilles conformément aux parois intérieures de la moitié de moule adjacente et réunion entre elles des feuilles mises en forme de cette manière, ladite mise en forme s'effectuant par application d'un vide entre chaque feuille et la moitié de moule relative et/ou par soufflage d'air entre les feuilles;
e) introduction d'un matériau isolant dans la porte,
f) ouverture du moule et extraction de la porte obtenue;
des axes de charnières (13) étant formés pendant l'étape mettant en oeuvre la mise en forme de chaque feuille de matière plastique, ces axes de charnières étant par conséquent réalisés d'un seul tenant avec le corps (2) de la porte (1).

2. Procédé selon la revendication 1, **caractérisé en ce que** lors de l'étape impliquant la mise en forme de chaque feuille de matière plastique, une poignée (18) est formée pour le déplacement de la porte pour son ouverture et sa fermeture.

3. Procédé selon la revendication 1, **caractérisé en ce que** lors de l'étape impliquant la mise en forme de chaque feuille de matière plastique, un renfoncement (10) est formé pour un élément servant à fixer la porte (1) ou pour la réception d'un élément de fixation de porte positionné sur une paroi antagoniste, contre laquelle ladite porte vient en butée lors de la fermeture.

4. Procédé selon la revendication 1, **caractérisé en ce que** lors de l'étape impliquant la mise en forme de chaque feuille de matière plastique, un renfoncement annulaire (19) est formé, renfoncement qui est aménagé dans une face (17) du corps (2) de la porte (1) pendant son thermoformage, puis un matériau isolant est introduit dans ce renfoncement à l'état plastique de manière à définir, après polymérisation, un joint d'étanchéité sur ladite face.

5. Porte fabriquée conformément au procédé selon la revendication 1 pour un appareil électroménager ou pour un compartiment interne d'un tel appareil, comme par exemple une porte pour un compartiment dont la température est inférieure à 0°C, insérée dans un compartiment dont la température est supérieure à 0°C d'un réfrigérateur, ladite porte (1) comprenant un corps (2) formé d'une matière plastique, ledit corps comportant deux parties (3,4) réunies l'une à l'autre et définissant une cavité intérieure (6), dans laquelle un matériau isolant est présent, le corps présentant des côtés opposés (8,9) et des faces opposées (16,17), **caractérisée en ce que** ledit corps (2) comprend des axes de charnières (13) solidaires de ses parties (3, 4).

6. Porte selon la revendication 5, **caractérisée en ce que** ledit corps (2) comprend une poignée (18).

7. Porte selon la revendication 5, **caractérisée en ce que** ledit corps (2) comprend un siège (10) pour un élément de fixation associé à la porte (1) ou pour un élément de blocage pour un élément de fixation associé à une paroi, contre laquelle la porte est en butée.

8. Porte selon les revendications 5 et 6, **caractérisée en ce que** son corps (2) comprend deux parties (3,4) réunies entre elles et dont chacune supporte une partie (13A,13B) de chaque axe de charnière (13), lesdites parties (13A,13B) définissant, à l'état réuni, ledit axe.
